# EUROPÄISCHE PATENTSCHRIFT

(11) **EP 4 013 985 B1**
(45) Veröffentlichungstag und Bekanntmachung des Hinweises auf die Patenterteilung: **18.03.2026**
(21) Anmeldenummer: 20757567.1
(22) Anmeldetag: 13.08.2020
(51) Int. Cl.: F16L 13/14, F16L 33/207

(54) **VERBINDUNGSELEMENT SOWIE DIESES UMFASSENDE ROHRVERBINDUNG**
CONNECTING ELEMENT AND TUBE CONNECTION COMPRISING SAME
ÉLÉMENT DE RACCORDEMENT ET RACCORDEMENT DE TUYAU FAISANT INTERVENIR CET ÉLÉMENT DE RACCORDEMENT

(30) Priorität: 15.08.2019 DE 202019104494 U
(43) Veröffentlichungstag der Anmeldung: 22.06.2022
(73) Patentinhaber: REHAU Industries SE & Co. KG, 95111 Rehau (DE)
(72) Erfinder: HOMBURG, Hansi, 91315 Höchstadt (DE); KIRCHBERGER, Andreas, 91074 Herzogenaurach (DE); SCHAAF, Thomas, 91315 Höchstadt (DE); VOCKS, Oliver, 90765 Fürth (DE)
(86) Internationale Anmeldenummer: PCT/EP2020/072764
(87) Internationale Veröffentlichungsnummer: WO 2021/028537

(56) Entgegenhaltungen:
- EP-A2- 1 953 441
- WO-A1-2007/045033
- DE-A1- 102010 053 006
- DE-A1- 102015 122 346
- DE-U1- 202015 106 954
- DE-U1- 202015 106 955
- ES-A1- 2 302 653

## Beschreibung

Die vorliegende Erfindung betrifft ein Verbindungselement zur Herstellung einer Rohrverbindung zwischen dem Verbindungselement und einem Kunststoffrohr oder einem Metall-Kunststoff-Verbundrohr, wobei das Verbindungselement mindestens einen mit mehreren umlaufenden Außenrippen versehenen Stützkörper zum Aufschieben eines Rohrendes aufweist, wobei der mindestens eine Stützkörper eine zentrale Achse sowie ein offenes Ende aufweist und mindestens zwei umlaufende Außenrippen in einem spitzen Winkel gegen die zentrale Achse geneigt sind. Darüber hinaus betrifft die vorliegende Erfindung eine Rohrverbindung zwischen einem Ende eines Vollkunststoffrohrs oder eines Kunststoff-Verbundrohrs und einem Verbindungselement, wobei die Rohrverbindung ein Ende eines Vollkunststoffrohrs oder eines Kunststoff-Verbundrohrs und ein derartiges Verbindungselement umfasst.

Derartige Verbindungselemente und diese umfassende Rohrverbindungen sind aus dem Stand der Technik bekannt. Die Fixierung des Rohrendes an dem Verbindungselement erfolgt über eine über dem Rohrende angeordnete Fixierhülse, durch die das Rohrende an die Außenkontur des mit umlaufenden Außenrippen versehenen Stützkörpers gedrückt wird. Je nach Art der Aufbringung der verwendeten Fixierhülse unterscheidet man verschiedene Arten von Verbindungstechniken. In Schiebehülsenverbindungen, die auch als Axialpressverbindungen bezeichnet werden, ist der Stützkörper des Verbindungselements in ein aufgeweitetes oder nicht aufgeweitetes Rohrende eingesteckt und eine außen am Rohrende anliegende Schiebehülse ist mittels eines speziellen Schiebewerkzeugs in axialer Richtung auf das Rohrende mit eingeschobenen Stützkörper des Verbindungselements aufgeschoben. Ein derartiges Axialpresssystem mit einer Schiebehülse ist beispielsweise in der DE 101 30 858 A1 beschrieben. Bei Radialpressverbindungen wird die Presshülse zunächst auf das zu anzuschließende Kunststoffrohr aufgeschoben. Daraufhin wird der Stützkörper, der aus Metall oder einem Kunststoffmaterial sein kann, in das Rohrende des Kunststoffrohres eingeschoben. Die Presshülse wird über der Stützhülse auf dem Rohrende positioniert und abschließend mit entsprechenden Presswerkzeugen radial auf das Rohrende aufgepresst und dabei mechanisch irreversibel verformt. Der Stützkörper kann dabei aus Metall, beispielsweise entzinkungsbeständigem Messing oder Edelstahl, oder aus einem hydrolysebeständigen Polymermaterial, wie Polysulfon (PSU), Polyethersulfon (PES) oder Polyphenylsulfon (PPSU), bestehen.

Insbesondere bei mechanischen Rohrverbindungen, bei denen das auf den Stützkörperaufzubringende Rohrende nicht aufgeweitet ist, ist eine Abstimmung der Maße der einzelnen Komponenten aufeinander erforderlich, wobei insbesondere der Außendurchmesser des Verbindungselements und der Innendurchmesser des Rohres so gewählt werden, dass das Verbindungselement einerseits leicht in das Rohrende einsteckbar ist, unter seinem Eigengewicht jedoch nicht aus dem Rohr herausfällt. Darüber hinaus kann beim Abschneiden insbesondere von Metall-Kunststoff-Verbundrohren ein Grat entstehen, der das Einstecken eines Verbindungselements in das abgeschnittene Rohrende weiter erschwert. Ferner kann auch durch das Abschneiden des Rohres die Einsteckbarkeit des Verbindungselements in das Rohrende negativ beeinflussen, weil eine Ovalität des Rohrs durch den Einfluss von Rohrscheren weiter verstärkt werden kann. Aus diesen Gründen ist es in der Regel erforderlich, das Rohr vor dem Einführen des Verbindungselements bzw. dem Aufschieben auf den Stützkörper des Verbindungselements mit einem speziellen Werkzeug zu kalibrieren, so dass die Ovalität des Rohrs reduziert und ggf. zusätzlich ein eventuell vorhandener Grat durch Anfasen des Rohrendes entfernt werden.

Solche Verbindungselemente und diese umfassende Rohrverbindungen sind beispielsweise aus der DE 10 2010 053 006 A1, der EP 1 953 441 A2, der ES 2 302 653 A1, der WO 2007/045033 A1 und der DE 20 2015 106 955 U1 bekannt.

Vor diesem Hintergrund liegt die Aufgabe der vorliegenden Erfindung in der Bereitstellung eines Verbindungselements und einer dieses umfassenden Rohrverbindung, die die Nachteile des Stands der Technik überwinden. Insbesondere soll das erfindungsgemäße Verbindungselement leichter in ein Rohrende eingeführt werden können, wobei der Schritt der Rohrkalibrierung ggf. nicht mehr erforderlich ist.

Diese und andere Aufgaben werden gemäß der vorliegenden Erfindung durch ein Verbindungselement mit den Merkmalen des Anspruchs 1 bzw. einer Rohrverbindung mit den Merkmalen des Anspruchs 12 gelöst. Bevorzugte Ausführungsformen des erfindungsgemäßen Verbindungselement und der erfindungsgemäßen Rohrverbindung sind in den abhängigen Ansprüchen beschrieben.

Gemäß der vorliegenden Erfindung wurde erkannt, dass sich umlaufende Außenrippen, die in einem spitzen Winkel gegen die zentrale Achse des Stützkörpers geneigt sind, positiv auf die Einsteckbarkeit des Stützkörpers in ein Rohrende auswirken. Dieser Effekt ist besonders bei sehr flachen Neigungswinkeln stark ausgeprägt. Allerdings wird aufgrund der aus den sehr flachen Neigungswinkeln resultierenden Länge der umlaufenden Außenrippen die durch die Fixierhülse übertragene radiale Kraft auf eine größere Fläche verteilt, was die Stabilität der resultierenden Rohrverbindung beeinträchtigen kann. Dem kann entgegengewirkt werden, indem der Stützkörper des Verbindungselements mindestens eine weitere umlaufende Außenrippe mit einem höheren Neigungswinkel umfasst. Bei solchen umlaufenden Außenrippen mit einem höheren Neigungswinkel wirkt die durch die Fixierhülse übertragene radiale Kraft auf eine kleinere Fläche ein, wodurch die Stabilität der Rohrverbindung verbessert wird. Darüber hinaus kann die beispielsweise durch das Ablängen des Rohrs auftretende Ovalität des Rohrendes durch umlaufende Außenrippen mit verschieden großen Neigungswinkeln beim Aufschieben auf den Stützkörper des Verbindungselements reduziert werden. Auch ein eventuell am Rohrende vorhandener Grat, der beim Abschneiden des Rohres durch das Schneidwerkzeug verursacht werden kann, beeinflusst die Einsteckbarkeit des Stützkörpers mit derartigen umlaufenden Außenrippen in das Rohrende kaum. Daher wird der zusätzliche Schritt des Rohrkalibrierens bei Verwendung eines derartigen Verbindungselements entbehrlich.

Dementsprechend liegt die vorliegende Erfindung in der Bereitstellung eines Verbindungselements zur Herstellung einer Rohrverbindung zwischen dem Verbindungselement und einem Kunststoffrohr oder einem Metall-Kunststoff-Verbundrohr, wobei das Verbindungselement mindestens einen mit mehreren umlaufenden Außenrippen versehenen Stützkörper zum Aufschieben eines Rohrendes aufweist, wobei der mindestens eine Stützkörper eine zentrale Achse sowie eine offenes Ende aufweist und mindestens zwei umlaufende Außenrippen in einem spitzen Winkel gegen die zentrale Achse geneigt sind, wobei sich das Verbindungselement erfindungsgemäß dadurch auszeichnet, dass der spitze Winkel, in dem die umlaufende Außenrippe gegen die zentrale Achse geneigt ist, sich von dem spitzen Winkel unterscheidet, in dem mindestens eine der umlaufenden Außenrippen, die weiter von dem offenen Ende beabstandet ist als die erstgenannte umlaufende Außenrippe, gegen die zentrale Achse geneigt ist wobei die spitzen Winkel, mit dem die jeweilige Außenrippe gegen die zentrale Achse geneigt ist, ausgehend vom offenen Ende stetig zunimmt. Darüber hinaus betrifft die vorliegende Erfindung eine Rohrverbindung zwischen einem Ende eines Vollkunststoffrohrs oder eines Kunststoff-Verbundrohrs und einem Verbindungselement, die ein Rohrende eines Vollkunststoffrohrs oder eines Kunststoff-Verbundrohrs und ein erfindungsgemäßes Verbindungselement umfasst.

Hinsichtlich des erfindungsgemäßen Verbindungselements kann es von Nutzen sein, wenn der spitze Winkel, in dem die umlaufende Außenrippe gegen die zentrale Achse geneigt ist, kleiner ist als der spitze Winkel, in dem mindestens eine der umlaufenden Außenrippen, die weiter von dem offenen Ende beabstandet ist als die erstgenannte umlaufende Außenrippe, die gegen die zentrale Achse geneigt ist. Dies trägt zu einer stärkeren Reduktion der Ovalität des abgeschnittenen Rohrendes bei. Zu diesem Zweck ist es besonders bevorzugt, wenn der Neigungswinkel der umlaufenden Außenrippen vom offenen Ende des Stützkörpers beginnend zunehmen.

Es kann sich auch als hilfreich erweisen, wenn die Differenz des spitzen Winkels, in dem die umlaufende Außenrippe gegen die zentrale Achse geneigt ist, und dem spitzen Winkel, in dem mindestens einer der umlaufenden Außenrippen, die weiter von dem offenes Ende beabstandet ist als die umlaufende Außenrippe, gegen die zentrale Achse geneigt ist, in einem Bereich von 3° bis 20°, vorzugsweise in einem Beriech von 5° bis 15° und besonders bevorzugt in einem Bereich von 8° bis 12° liegt. Bei Neigungswinkeln in diesen Bereichen ergibt sich ein ausgewogenes Verhältnis zwischen der leichten Einschiebbarkeit des Stützkörpers des erfindungsgemäßen Verbindungselements zur Stabilität der Rohrverbindung.

Es kann auch günstig sein, wenn der Stützkörper mindestens eine umlaufende Außenrippe mit im Wesentlichen rechteckigen Querschnitt umfasst. Derartige umlaufende Außenrippen mit im Wesentlichen rechteckigen Querschnitt sind weniger anfällig für Fallschlagmacken. Da derartige Rechtecksrippen einen negativen Einfluss auf die Aufschiebbarkeit des Rohrendes ausüben können, ist es bevorzugt, wenn auf der dem offenen Ende des Stützkörpers zugewandten Seite und/oder auf der dem offenen Ende des Stützkörpers abgewandten Seite der mindestens einen umlaufenden Außenrippe mit im Wesentlichen rechteckigen Querschnitt mindestens eine umlaufende Außenrippe angeordnet ist, die im spitzen Winkel gegen die zentrale Achse geneigt ist. Besonders bevorzugt ist es in diesem Zusammenhang, wenn die umlaufenden Außenrippen mit im Wesentlichen rechteckigen Querschnitt einen geringeren Außendurchmesser aufweisen als die Außenrippen, die im spitzen Winkel gegen die zentrale Achse geneigt sind. Dies gewährleistet eine leichte Aufschiebbarkeit des Rohres auf den Stützkörper des erfindungsgemäßen Verbindungselements, wobei der reduzierte Durchmesser der umlaufenden Außenrippen mit im Wesentlichen rechteckigen Querschnitt die Dichtwirkung im verpressten Zustand auf allen umlaufenden Außenrippen gewährleistet ist. Dazu ist es besonders bevorzugt, wenn die geneigten umlaufenden Außenrippen einen steilen Neigungswinkel aufweisen, vorzugsweise in einem Bereich von 15° bis 50°. So können die geneigten umlaufenden Außenrippen tief in das Rohrmaterial eingreifen und eine hohe Dichtheit der resultierenden Rohrverbindung gewährleisten. In weiteren bevorzugten Ausführungsformen stellt eine umlaufende Außenrippe mit im Wesentlichen rechteckigen Querschnitt die am weitesten vom offenen Ende des Stützkörpers entfernte Außenrippe dar. In besonders bevorzugten Ausführungsformen können die umlaufenden Außenrippen mit im Wesentlichen rechteckigen Querschnitt auch die umlaufenden Außenrippen sein, die am weitesten vom offenen Ende des Stützkörpers entfernt sind. In diesem Fall können die umlaufenden Außenrippen auch ein ebenso hohen Außendurchmesser aufweisen als die geneigten umlaufenden Außenrippen. Bei Einbringen des Stützkörpers in das Rohrende ist in einem derartigen Fall der ggf. auftretende Grat bereits durch die geneigten umlaufenden Außenrippen nivelliert, so dass das Einbringen des Stützkörpers in das Rohrende nicht mehr behindert wird.

Es kann auch günstig sein, wenn das Verbindungselement weiter mindestens einen umlaufenden Kragen umfasst. Ein derartiger umlaufender Kragen dient als Angriffsstelle eines Presswerkzeugs beim Erzeugen der erfindungsgemäßen Rohrverbindung.

Es kann auch von Nutzen sein, wenn das Verbindungselement als Polymerbauteil oder als metallisches Bauteil ausgebildet ist. Dabei hat es sich als besonders günstig erwiesen, wenn das Polymermaterial des Verbindungselements ausgewählt ist aus der Gruppe, bestehend aus Polypropylen (PP), Polyamiden, Polyvinylidenfluorid (PVDF), Polyethersulfon (PES), Polysulfon (PSU), Polyphenylsulfon (PPSU), Polyphenylensulfid (PPS), Polyvinylchlorid (PVC), Polyoxymethylen (POM), Acrylnitril-Butadien-Styrol-Copolymerisat (ABS) und Polyestercarbonat (PESC) sowie Copolymeren und Blends dieser Polymere, jeweils auch in faserverstärkter Form. Alternativ können auch metallische Werkstoffe wie beispielsweise Messing, insbesondere Ecobrass^{®}, Rotguss und Edelstahl, eingesetzt werden.

In Bezug auf die erfindungsgemäße Rohrverbindung kann es bevorzugt sein, wenn die Rohrverbindung als Axialpressverbindung mit einer Schiebehülse ausgebildet ist. Die hohe Stabilität des erfindungsgemäßen Verbindungselements ist für eine derartige Axialpressverbindung, bei deren Herstellung insbesondere am umlaufenden Kragen hohe Axialkräfte einwirken, besonders geeignet. Ganz besonders günstig wirkt sich bei Axialpresssystem, bei denen das Rohrende vor dem Einbringen des Stützkörpers nicht aufgeweitet wird, aus, dass ein ggf. durch beim Abschneiden des Rohres gebildeter Grat durch die umlaufenden Außenrippen mit unterschiedlichen Neigungswinkeln wieder nivelliert wird.

Gemäß der vorliegenden Erfindung kommen als Kunststoffrohre Vollkunststoffrohre, bevorzugt aus Polyethylen (PE, insbesondere PE 100 und PE-RT), vernetztem Polyethylen (PE-X, insbesondere PE-Xa, PE-Xb und PE-Xc), Polypropylen (insbesondere statistischem Polypropylen PP-R) und Polybutylen (PB); sowie Kunststoff-Verbundrohre, bevorzugt mit Schichten aus Polyethylen (PE, insbesondere PE 100 und PE-RT), vernetztem Polyethylen (PE-X, insbesondere PE-Xa, PE-Xb und PE-Xc), Polypropylen (insbesondere statistischem Polypropylen PP-R), und/oder Polybutylen (PB) zum Einsatz. Als Sauerstoffsperrschicht kann zusätzlich eine Schicht aus Ethylen-Vinylalkohol-Copolymer (EVOH) vorhanden sein. Metall-Kunststoff-Verbundrohre (MKV-Rohre) umfassen gemäß der vorliegenden Erfindung bevorzugt Schichten aus Polyethylen (PE, insbesondere PE 100 und PE-RT), vernetztem Polyethylen (PE-X, insbesondere PE-Xa, PE-Xb und PE-Xc), Polypropylen (insbesondere statistischem Polypropylen PP-R) und/oder Polybutylen (PB) und mindestens eine Schicht aus Metallen, vorzugsweise Aluminium. Die Metallschicht ist vorzugsweise stumpfgeschweißt. Bei Kunststoff-Verbundrohren und MKV-Rohren können zwischen einzelnen Schichten Haftvermittlerschichten eingebracht sein. Gemäß der vorliegenden Erfindung können alle Rohre einer erfindungsgemäßen Rohrverbindung identisch aufgebaut sein oder eines oder mehrere der Rohre können unterschiedliche Rohraufbauten aufweisen. Darüber hinaus können die Rohre gemäß der vorliegenden Erfindung auch faserverstärkt sein. Die Faserverstärkung der Leitungsrohre kann in einzelnen oder in allen Rohren, über die gesamte Rohrlänge oder auch nur in Abschnitten, vorhanden sein. Hinsichtlich des Kunststoffrohres oder des Metall-Kunststoff-Verbundrohres der erfindungsgemäßen Rohrverbindung ist es besonders bevorzugt, dass mindestens eine Schicht des jeweiligen Rohres vernetztes Polyethylen (insbesondere PE-Xa, PE-Xb und PE-Xc) umfasst. Der Werkstoff "vernetztes Polyethylen" ist ein Werkstoff, der über ein Formgedächtnis bzw. einen sog. "Memory-Effekt" verfügt. Dieser Memory-Effekt liegt darin, dass das vernetzte Polyethylen nach einer Veränderung seiner äußeren Geometrie versucht, wieder in seine ursprüngliche Form zurückzukehren. Beim Aufweiten von Rohren führt dies dazu, dass ein PE-X-umfassendes Rohr nach dem Aufweiten wieder versucht, den Rohrinnendurchmesser vor dem Aufweiten zu erreichen. Da nach dem Aufweiten ein Stützkörper eines Verbindungselements in das aufgeweitete Rohrende eingesetzt wird, führt der Memory-Effekt beim Einsatz eines Rohres, das zumindest eine Schicht mit vernetztem Polyethylen umfasst, zu einer besonders hohen Dichtheit der erfindungsgemäßen Rohrverbindung.

Bei dem erfindungsgemäßen Verbindungselement kann es sich um ein Gewindeformteil oder um ein gewindeloses Formteil, also um ein Verbindungselement, das kein Gewinde aufweist, handeln. Dies beinhaltet insbesondere Anschlussstücke, Anschlusswinkel, Mehrfachverteiler, T-Stücke, Wand-T-Stücke, Wandwinkel, Systemübergänge, Übergangsstücke, gewinkelte Übergangsstücke, die jeweils kein Gewinde aufweisen. Dementsprechend bezieht sich der Begriff "Gewindeformteil" auf ein Verbindungselement, das mindestens ein Gewindeformteil besitzt. Dies beinhaltet insbesondere Anschlusstücke, Anschlusswinkel, Mehrfachverteiler, T-Stücke, Wand-T-Stücke, Wandwinkel, Systemübergänge, Übergangsstücke und gewinkelte Übergangsstücke, die jeweils mindestens ein Innen- und/oder Außengewinde aufweisen.

Erfindungsgemäß eignen sich als Materialien für die Schiebehülse vorzugsweise polymere Werkstoffe wie beispielsweise Polypropylen und glasfaserverstärktes Polypropylen, Polyamide und glasfaserverstärkte Polyamide, temperaturbeständige Thermoplaste wie Polyphenylsulfon (PPSU), Polyvinylidenfluorid (PVDF), Polyethersulfon (PES), Polysulfon (PSU), Polyphenylensulfid (PPS), Acrylnitril-Butadien-Styrol-Copolymerisat (ABS) und Polyestercarbonat (PESC) sowie Copolymere und Blends dieser Polymere, wobei diese Polymermaterialien auch faserverstärkt, insbesondere glasfaserverstärkt zum Einsatz kommen können, sowie metallische Werkstoffe wie beispielsweise Messing, insbesondere Ecobrass^{®}, Rotguss und Edelstahl. Temperaturbeständige Kunststoffe und insbesondere Polyphenylsulfon und Polyvinylidenfluorid sind als Materialien für die Schiebehülse besonders bevorzugt. Vernetztes Polyethylen (insbesondere PE-Xa, PE-Xb und PE-Xc) ist als Material für die Schiebehülse ebenfalls besonders bevorzugt.

Die Rohrverbindung gemäß der vorliegenden Erfindung wird insbesondere in Leitungs- und Anschlusssystemen in der Trinkwasserinstallation, in Sprinkleranlagen, in Heizkörperanbindungen, in Betonkerntemperierungen sowie in Flächenheizungs- und/oder Flächenkühlungssystemen eingesetzt.

Die erfindungsgemäße Rohrverbindung Anordnung sowie einzelne Teile davon, insbesondere das erfindungsgemäße Verbindungselement, können beispielsweise zeilenweise oder schichtweise unter Verwendung eines zeilenaufbauenden oder schichtaufbauenden Fertigungsverfahrens (z. B. 3D-Druck) hergestellt werden. Bevorzugt wird das erfindungsgemäße Verbindungselement jedoch im Rahmen eines Spritzgussvorgangs hergestellt.

Im Folgenden soll die Erfindung unter Bezugnahme auf die in den Figuren dargestellten Ausführungsformen im Detail erläutert werden. Dabei zeigt:
Fig. 1 eine Querschnittsansicht eines Verbindungselements gemäß einer Ausführungsform der vorliegenden Erfindung;
Fig. 2 eine Querschnittsansicht eines Verbindungselements gemäß einer weiteren Ausführungsform der vorliegenden Erfindung; und
Fig. 3 eine Querschnittsansicht einer Rohrverbindung gemäß einer Ausführungsform der vorliegenden Erfindung.

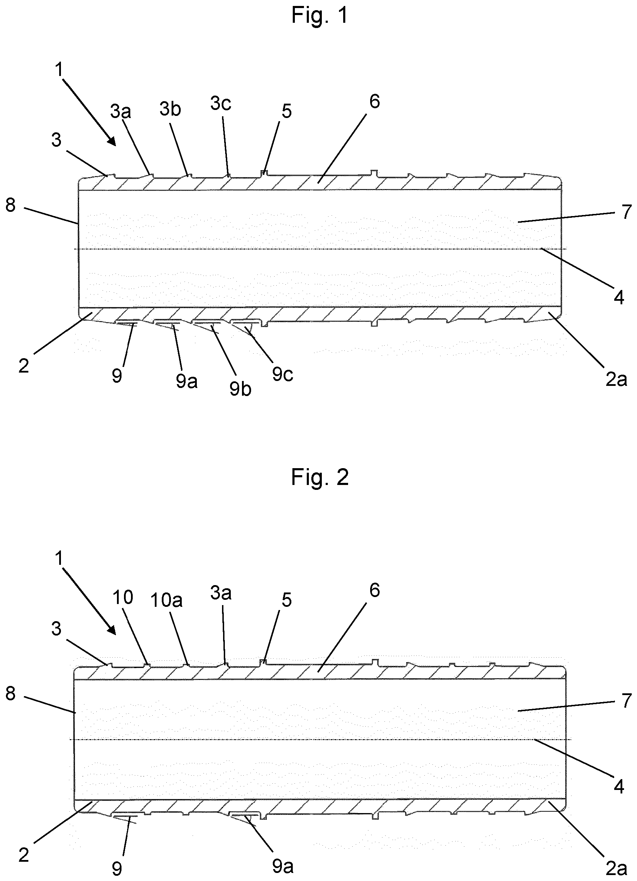

In Fig. 1 ist ein erfindungsgemäßes Verbindungselement 1 zur Herstellung einer Rohrverbindung zwischen dem Verbindungselement 1 und einem Kunststoffrohr oder einem Metall-Kunststoff-Verbundrohr gemäß einer Ausführungsform der vorliegenden Erfindung in einer Querschnittsansicht gezeigt. Bei dem erfindungsgemäßen Verbindungselement 1 handelt es sich um ein Verbindungsstück mit zwei Stützkörpern 2, 2a. Das Verbindungselement 1 ist in der in Fig. 1 dargestellten Ausführungsform als einstückiges Kunststoffbauteil aus glasfaserverstärktem Polyphenylsulfon (PPSU) ausgebildet. Der Aufbau des erfindungsgemäßen Verbindungselements 1 ist im Folgenden in Bezug auf den in Fig. 1 linken Stützkörper 2 detailliert beschrieben, wobei es sich versteht, dass diese Ausführungen für den in Fig. 1 rechten Stützkörper 2a sowie in anderen Ausführungsformen ggf. vorhandene weitere Stützkörper entsprechend gelten. In der in Fig. 1 gezeigten Ausführungsform weist der Stützkörper 2 vier umlaufende Außenrippen 3, 3a, 3b. 3c auf. An ihrer Innenseite weist der Stützkörper 2 jeweils eine im Wesentlichen zylindrische Innenoberfläche mit einer gemeinsamen zentralen Achse 4 auf. Den Abschluss des Stützkörpers 2 bildet ein umlaufender Kragen 5. Die beiden Stützkörper 2, 2a sind über einen Verbindungsbereich 6 miteinander verbunden. Darüber hinaus bilden die beiden Stützkörper 2, 2a zusammen mit dem Verbindungsbereich 6 einen Verbinderkanal 7, der im Betrieb des erfindungsgemäßen Verbindungselements 1 von einem Medium durchströmbar ist.

Die vier umlaufenden Außenrippen 3, 3a, 3b, 3c sind im Querschnitt sägezahnförmig ausgebildet. Dabei ist die dem offenen Ende 8 zugewandte Seite der umlaufenden Außenrippen 3, 3a, 3b, 3c jeweils in einem spitzen Winkel 9, 9a, 9b, 9c gegen die zentrale Achse 4 geneigt. Die dem offenen Ende 8 abgewandte Seite der umlaufenden Außenrippen 3, 3a, 3b, 3c schließt mit der zentralen Ache 4 einen rechten Winkel ein, wobei die Übergänge zu der dem offen Ende 8 zugewandten Seite und dem Basisbereich des Stützkörpers 2, 2a jeweils abgerundet sind. Der spitze Winkel 9 der umlaufenden Außenrippe 3 beträgt dabei 7°, der spitze Winkel 9a der umlaufenden Außenrippe 3a beträgt 15°, der spitze Winkel 9b der umlaufenden Außenrippe 3b beträgt 20° und der spitze Winkel 9c der umlaufenden Außenrippe 3a beträgt 30°. Damit nehmen die spitzen Winkel 9, 9a, 9b, 9c, mit dem die jeweilige Außenrippe 3, 3a, 3b, 3c gegen die zentrale Achse 4 geneigt ist, ausgehend vom offenen Ende 5 stetig zu. Dadurch wird die beim Ablängen des Rohres entstehende Ovalität beim Aufschieben des Rohrendes auf den Stützkörper 2, 2a des erfindungsgemäßen Verbindungselements 1 stark verringert. Dadurch kann auf den zusätzlichen Schritt des Rohrkalibrierens bei Verwendung eines erfindungsgemäßen Verbindungselements 1 verzichtet werden.

An die beiden Stützkörper 2, 2a können in einer erfindungsgemäßen Rohrverbindung die Enden identischer oder unterschiedlicher Kunststoffrohre oder Metall-Kunststoff-Verbundrohre angeschlossen werden.

In Fig. 2 ist eine weitere Ausführungsform des erfindungsgemäßen Verbindungselements 1 gezeigt. Um Wiederholungen zu vermeiden, werden daher im Folgenden nur Unterschiede zu der in Fig. 1 dargestellten Ausführungsform des erfindungsgemäßen Verbindungselements 1 beschrieben. Die Ausführungen zu Fig. 1 gelten auch für die Ausführungsform der Figur 2 entsprechend. Gleiche Elemente sind in den Abbildungen durch identische Bezugszeichen gekennzeichnet.

In Fig. 2 ist eine weitere Ausführungsform des erfindungsgemäßen Verbindungselements 1 wiederum in einer Querschnittsansicht gezeigt. Das in Fig. 2 dargestellte erfindungsgemäße Verbindungselement 1 unterscheidet sich von der in Fig. 1 dargestellten Ausführungsform lediglich hinsichtlich der Ausgestaltung der umlaufenden Außenrippen. In dem erfindungsgemäßen Verbindungselement 1 gemäß Fig. 2 ist die dem offenen Ende 4 benachbarte umlaufende Außenrippe 3 als sägezahnförmige Außenrippe ausgebildet, wobei der spitze Winkel 9, mit dem die umlaufenden Außenrippe 3 gegen die zentrale Achse 4 geneigt ist, dabei 15° beträgt. Daran schließen sich zwei umlaufende Außenrippen 10, 10a mit im Wesentlichen rechteckigen Querschnitt an. Zwischen der umlaufenden Außenrippe 10a und der dem umlaufenden Kragen 5 ist eine weitere umlaufenden Außenrippe 3a angeordnet, wobei der spitze Winkel 9a, in dem die umlaufenden Außenrippe 3a gegen die zentrale Achse 4 geneigt ist, in der Ausführungsform gemäß Fig. 2 20° beträgt. Die starke Neigung der umlaufenden Außenrippen 3, 3a bewirkt ein tiefes Eingreifen der umlaufenden Außenrippen in das Rohrmaterial und damit eine hohe Dichtheit der resultierenden Rohrverbindung. Die umlaufenden Außenrippen 10, 10a weisen einen geringeren Außendurchmesser auf als die umlaufenden Außenrippen 3, 3a, die im spitzen Winkel gegen die zentrale Achse 4 geneigt sind. Dies gewährleistet eine leichte Aufschiebbarkeit des Rohres auf den Stützkörper 2, 2a des erfindungsgemäßen Verbindungselements 1. Die umlaufenden Außenrippen 10, 10a mit im Wesentlichen rechteckigen Querschnitt machen das erfindungsgemäße Verbindungselement 1 auch weniger anfällig gegenüber Fallschlagmacken. Darüber hinaus ist das Verbindungselement 1 ist in der in Fig. 2 dargestellten Ausführungsform als einstückiges Kunststoffbauteil aus glasfaserverstärktem Polyphenylsulfon (PPSU) ausgebildet.

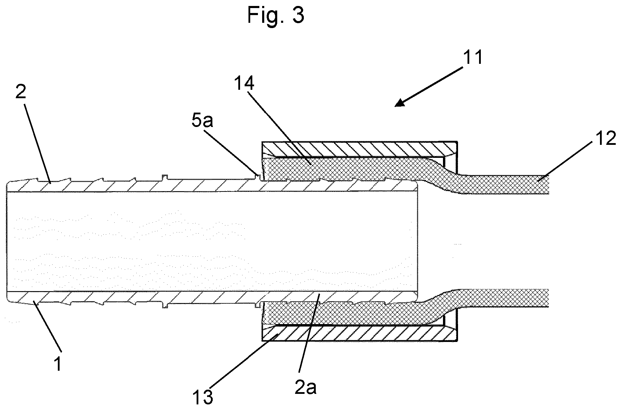

Fig. 3 zeigt letztlich eine das erfindungsgemäße Verbindungselement 1 gemäß Fig. 1 umfassende Rohrverbindung 11, die in der dargestellten Ausführungsform als Schiebehülsenverbindung ausgebildet ist, in einer Querschnittsdarstellung, wobei lediglich am Stützkörper 2a der Anschluss eines Rohres 12 erfolgt ist. Darin ist eine Schiebehülse 13 über das auf den Stützkörper 2a aufgeschobene, aufgeweitete Ende 14 eines Kunststoffrohres 12, das bis nahe an den umlaufenden Kragen 5a des Stützkörpers 2a des erfindungsgemäßen Verbindungselements 1 geschoben ist, in axialer Richtung aufgepresst.

Zur Erzeugung der erfindungsgemäßen Rohrverbindung 11 wird zunächst die Schiebehülse 13 über das Ende 14 des Kunststoffrohres 12 geschoben. Dann wird ein Aufweitwerkzeug in das Ende 14 des Kunststoffrohres 12 eingeführt und das Kunststoffrohr 12 am Ende mithilfe eines Aufweitwerkzeugs aufgeweitet. Daraufhin wird der Stützkörper 2a des erfindungsgemäßen Verbindungselements 1 in das aufgeweitete Ende 14 des Kunststoffrohres 12 eingeführt, bis das aufgeweitete Ende 14 des Kunststoffrohres 12 am umlaufenden Kragen 5a annähernd anliegt. Abschließend wird die Schiebehülse 13 durch ein geeignetes Schiebewerkzeug in axialer Richtung auf das aufgeweitete Ende 14 des Kunststoffrohres 12 mit eingeführtem Stützkörper 2a geschoben. Dabei drückt sich das Kunststoffmaterial des Kunststoffrohres 12 in die Außenkontur des Stützkörpers 2a des erfindungsgemäßen Verbindungselements 1 ein.

In alternativen Ausführungsformen kann es sich bei der erfindungsgemäße Rohrverbindung 1 auch um eine Axialpressverbindung mit einer Schiebehülse 13 handeln, bei der das das Ende 14 des Kunststoffrohres 12 nicht aufgeweitet ist. Bei der Herstellung der erfindungsgemäßen Rohrverbindung 1 fehlt dann die Stufe des Aufweitens des Rohrendes 12.

Die vorliegende Erfindung wurde unter Bezugnahme auf die in den Figuren gezeigten Ausführungsformen der vorliegenden Erfindung im Detail beschrieben. Es versteht sich, dass die vorliegende Erfindung nicht auf die gezeigten Ausführungsformen beschränkt ist, sondern sich der Umfang der vorliegenden Erfindung aus den beiliegenden Ansprüchen ergibt.

## Patentansprüche

1. Verbindungselement (1) zur Herstellung einer Rohrverbindung (11) zwischen dem Verbindungselement (1) und einem Kunststoffrohr (12) oder einem Metall-Kunststoff-Verbundrohr (12), wobei das Verbindungselement (1) mindestens einen mit mehreren umlaufenden Außenrippen (3, 3a, 3b, 3c) versehenen Stützkörper (2, 2a) zum Aufschieben eines Rohrendes (14) aufweist, wobei der mindestens eine Stützkörper (2, 2a) eine zentrale Achse (4) sowie eine offenes Ende (8) aufweist und mindestens zwei umlaufende Außenrippen (3, 3a, 3b, 3c) in einem spitzen Winkel (9, 9a, 9b, 9c) gegen die zentrale Achse (4) geneigt sind,
wobei der spitze Winkel (9 , 9a, 9b), in dem die umlaufende Außenrippe (3, 3a, 3b) gegen die zentrale Achse (4) geneigt ist, sich von dem spitzen Winkel (9a, 9b, 9c) unterscheidet, in dem mindestens eine der umlaufenden Außenrippen (3a, 3b, 3c), die weiter von dem offenen Ende (8) beabstandet ist als die umlaufende Außenrippe (3, 3a, 3b), gegen die zentrale Achse (4) geneigt ist und wobei
die spitzen Winkel (9, 9a, 9b, 9c), mit dem die jeweilige Außenrippe (3, 3a, 3b, 3c) gegen die zentrale Achse (4) geneigt ist, ausgehend vom offenen Ende (5) stetig zunimmt.

2. Verbindungselement (1) nach Anspruch 1, **dadurch gekennzeichnet, dass** der spitze Winkel (9, 9a, 9b), in dem die umlaufende Außenrippe (3, 3a, 3b) gegen die zentrale Achse (4) geneigt ist, kleiner ist als der spitze Winkel (9a, 9b, 9c), in dem mindestens eine der umlaufenden Außenrippen (3a, 3b, 3c), die weiter von dem offenen Ende (8) beabstandet ist als die umlaufende Außenrippe (3, 3a, 3b), die gegen die zentrale Achse (4) geneigt ist.

3. Verbindungselement (1) nach Anspruch 1 oder Anspruch 2, **dadurch gekennzeichnet, dass** die Differenz des spitzen Winkels (9, 9a, 9b), in dem die umlaufende Außenrippe (3, 3a, 3b) gegen die zentrale Achse (4) geneigt ist, und dem spitzen Winkel (9a, 9b, 9c), in dem mindestens eine der umlaufenden Außenrippen (3a, 3b, 3c), die weiter von dem offenes Ende (8) beabstandet ist als die umlaufende Außenrippe (3, 3a, 3b), die gegen die zentrale Achse (4) geneigt ist, in einem Bereich von 3° bis 20° liegt.

4. Verbindungselement (1) nach einem der vorhergehenden Ansprüche, **dadurch gekennzeichnet, dass** die zum offenen Ende (8) des Stützkörpers (2, 2a) weisenden Seiten der umlaufenden Außenrippen (3, 3a, 3b, 3c) im spitzen Winkel (9, 9a, 9b, 9c) gegen die zentrale Achse (4) geneigt sind.

5. Verbindungselement (1) nach einem der vorhergehenden Ansprüche, **dadurch gekennzeichnet, dass** der Stützkörper (2, 2a) mindestens eine umlaufende Außenrippe (10, 10a) mit im Wesentlichen rechteckigen Querschnitt umfasst.

6. Verbindungselement (1) nach Anspruch 5, **dadurch gekennzeichnet, dass** sowohl auf der dem offenen Ende (8) des Stützkörpers (2, 2a) zugewandten Seite als auch auf der dem offenen Ende (8) des Stützkörpers (2, 2a) abgewandten Seite der mindestens einen umlaufenden Außenrippe (10, 10a) mit im Wesentlichen rechteckigen Querschnitt mindestens eine umlaufende Außenrippe (3, 3a, 3b, 3c) angeordnet ist, die im spitzen Winkel (9, 9a, 9b, 9c) gegen die zentrale Achse (4) geneigt ist.

7. Verbindungselement (1) nach Anspruch 5 oder Anspruch 6, **dadurch gekennzeichnet, dass** eine umlaufende Außenrippe (10, 10a) mit im Wesentlichen rechteckigen Querschnitt die am weitesten vom offenen Ende (8) des Stützkörpers entfernte Außenrippe darstellt.

8. Verbindungselement (1) nach einem der Ansprüche 5 bis 7, **dadurch gekennzeichnet, dass** die umlaufenden Außenrippen (10, 10a) mit im Wesentlichen rechteckigen Querschnitt einen geringeren Außendurchmesser aufweisen als die Außenrippen (3, 3a, 3b, 3c), die im spitzen Winkel (9, 9a, 9b, 9c) gegen die zentrale Achse (4) geneigt sind.

9. Verbindungselement (1) nach einem der vorhergehenden Ansprüche, **dadurch gekennzeichnet, dass** es weiter mindestens einen umlaufenden Kragen (5, 5a) umfasst, der den Abschluss des Stützkörpers (2, 2a) bildet.

10. Verbindungselement (1) nach einem der vorhergehenden Ansprüche, **dadurch gekennzeichnet, dass** das Verbindungselement (1) als Polymerbauteil ausgebildet ist.

11. Verbindungselement (1) nach einem der vorhergehenden Ansprüche, **dadurch gekennzeichnet, dass** das Polymermaterial des Verbindungselements (1) ausgewählt ist aus der Gruppe, bestehend aus Polypropylen (PP), Polyamiden, Polyvinylidenfluorid (PVDF), Polyethersulfon (PES), Polysulfon (PSU), Polyphenylsulfon (PPSU), Polyphenylensulfid (PPS), Polyvinylchlorid (PVC), Polyoxymethylen (POM), Acrylnitril-Butadien-Styrol-Copolymerisat (ABS) und Polyestercarbonat (PESC) sowie Copolymeren und Blends dieser Polymere, jeweils auch in faserverstärkter Form.

12. Rohrverbindung (11) zwischen einem Ende (14) eines Kunststoffrohrs (12) oder eines Metall-Kunststoff-Verbundrohrs (12) und einem Verbindungselement (1), umfassend:
ein Ende (14) des Kunststoffrohrs (12) oder des Metall-Kunststoff-Verbundrohrs (12); und
ein Verbindungselement (1) nach einem der Ansprüche 1 bis 11.

13. Rohrverbindung (12) nach Anspruch 12, **dadurch gekennzeichnet, dass** die Rohrverbindung (12) als Axialpressverbindung mit einer Schiebehülse (13) ausgebildet ist.

## Claims

1. A connecting element (1) for producing a pipe connection (11) between the connecting element (1) and a plastic pipe (12) or a metal-plastic composite pipe (12), wherein the connecting element (1) comprises at least one support body (2, 2a) provided with a plurality of circumferential outer ribs (3, 3a, 3b, 3c) for sliding a pipe end (14) thereonto, wherein the at least one support body (2, 2a) has a central axis (4) and an open end (8), and wherein at least two circumferential outer ribs (3, 3a, 3b, 3c) are inclined at an acute angle (9, 9a, 9b, 9c) relative to the central axis (4),
wherein
the acute angle (9, 9a, 9b) at which the circumferential outer rib (3, 3a, 3b) is inclined relative to the central axis (4) differs from the acute angle (9a, 9b, 9c) at which at least one of the circumferential outer ribs (3a, 3b, 3c), which is spaced farther from the open end (8) than the circumferential outer rib (3, 3a, 3b), is inclined relative to the central axis (4), and wherein the acute angles (9, 9a, 9b, 9c) at which the respective outer rib (3, 3a, 3b, 3c) is inclined relative to the central axis (4) continuously increase starting from the open end (5).

2. The connecting element (1) according to claim 1, **characterized in that** the acute angle (9, 9a, 9b) at which the circumferential outer rib (3, 3a, 3b) is inclined relative to the central axis (4) is smaller than the acute angle (9a, 9b, 9c) at which at least one of the circumferential outer ribs (3a, 3b, 3c), which is spaced farther from the open end (8) than the circumferential outer rib (3, 3a, 3b), is inclined relative to the central axis (4).

3. The connecting element (1) according to claim 1 or claim 2, **characterized in that** the difference between the acute angle (9, 9a, 9b) at which the circumferential outer rib (3, 3a, 3b) is inclined relative to the central axis (4) and the acute angle (9a, 9b, 9c) at which at least one of the circumferential outer ribs (3a, 3b, 3c), which is spaced farther from the open end (8) than the circumferential outer rib (3, 3a, 3b), is inclined relative to the central axis (4), lies within a range of 3° to 20°.

4. The connecting element (1) according to one of the preceding claims, **characterized in that** the sides of the circumferential outer ribs (3, 3a, 3b, 3c) facing the open end (8) of the support body (2, 2a) are inclined at the acute angle (9, 9a, 9b, 9c) relative to the central axis (4).

5. The connecting element (1) according to one of the preceding claims, **characterized in that** the support body (2, 2a) comprises at least one circumferential outer rib (10, 10a) having a substantially rectangular cross-section.

6. The connecting element (1) according to claim 5, **characterized in that** at least one circumferential outer rib (3, 3a, 3b, 3c), which is inclined at an acute angle (9, 9a, 9b, 9c) relative to the central axis (4), is arranged both on the side of the at least one circumferential outer rib (10, 10a) having a substantially rectangular cross-section facing the open end (8) of the support body (2, 2a) and on the side facing away from the open end (8) of the support body (2, 2a).

7. The connecting element (1) according to claim 5 or claim 6, **characterized in that** a circumferential outer rib (10, 10a) having a substantially rectangular cross-section constitutes the outer rib spaced farthest from the open end (8) of the support body.

8. The connecting element (1) according to one of claims 5 to 7, **characterized in that** the circumferential outer ribs (10, 10a) having a substantially rectangular cross-section have a smaller outer diameter than the outer ribs (3, 3a, 3b, 3c) which are inclined at an acute angle (9, 9a, 9b, 9c) relative to the central axis (4).

9. The connecting element (1) according to one of the preceding claims, **characterized in that** it further comprises at least one circumferential collar (5, 5a) which forms the termination of the support body (2, 2a).

10. The connecting element (1) according to one of the preceding claims, **characterized in that** the connecting element (1) is designed as a polymer component.

11. The connecting element (1) according to one of the preceding claims, **characterized in that** the polymer material of the connecting element (1) is selected from the group consisting of polypropylene (PP), polyamides, polyvinylidene fluoride (PVDF), polyethersulfone (PES), polysulfone (PSU), polyphenylsulfone (PPSU), polyphenylene sulfide (PPS), polyvinyl chloride (PVC), polyoxymethylene (POM), acrylonitrile-butadiene-styrene copolymer (ABS), and polyester carbonate (PESC), as well as copolymers and blends of these polymers, each also in fiber-reinforced form.

12. A pipe connection (11) between an end (14) of a plastic pipe (12) or a metal-plastic composite pipe (12) and a connecting element (1), comprising:
an end (14) of the plastic pipe (12) or the metal-plastic composite pipe (12); and
a connecting element (1) according to one of claims 1 to 11.

13. The pipe connection (12) according to claim 12, **characterized in that** the pipe connection (12) is designed as an axial press connection with a sliding sleeve (13).

## Revendications

1. Élément de raccordement (1) destiné à la réalisation d'un raccord de tuyau (11) entre l'élément de raccordement (1) et un tuyau en matière plastique (12) ou un tuyau composite métal-plastique (12), l'élément de raccordement (1) comprenant au moins un corps de support (2, 2a) pourvu de plusieurs nervures extérieures périphériques (3, 3a, 3b, 3c) destinées à recevoir par emmanchement une extrémité de tuyau (14), ledit au moins un corps de support (2, 2a) présentant un axe central (4) ainsi qu'une extrémité ouverte (8), et au moins deux nervures extérieures périphériques (3, 3a, 3b, 3c) étant inclinées selon un angle aigu (9, 9a, 9b, 9c) par rapport à l'axe central (4), dans laquelle
l'angle aigu (9, 9a, 9b) selon lequel la nervure extérieure périphérique (3, 3a, 3b) est inclinée par rapport à l'axe central (4) est différent de l'angle aigu (9a, 9b, 9c) selon lequel au moins l'une des nervures extérieures périphériques (3a, 3b, 3c), qui est disposée à une distance plus grande de l'extrémité ouverte (8) que la nervure extérieure périphérique (3, 3a, 3b), est inclinée par rapport à l'axe central (4), et dans laquelle les angles aigus (9, 9a, 9b, 9c) selon lesquels la nervure extérieure respective (3, 3a, 3b, 3c) est inclinée par rapport à l'axe central (4) augmentent de manière continue à partir de l'extrémité ouverte (5).

2. Élément de raccordement (1) selon la revendication 1, **caractérisé en ce que** l'angle aigu (9, 9a, 9b) selon lequel la nervure extérieure périphérique (3, 3a, 3b) est inclinée par rapport à l'axe central (4) est inférieur à l'angle aigu (9a, 9b, 9c) selon lequel au moins l'une des nervures extérieures périphériques (3a, 3b, 3c), disposée à une distance plus grande de l'extrémité ouverte (8) que la nervure extérieure périphérique (3, 3a, 3b), est inclinée par rapport à l'axe central (4).

3. Élément de raccordement (1) selon la revendication 1 ou la revendication 2, **caractérisé en ce que** la différence entre l'angle aigu (9, 9a, 9b) selon lequel la nervure extérieure périphérique (3, 3a, 3b) est inclinée par rapport à l'axe central (4) et l'angle aigu (9a, 9b, 9c) selon lequel au moins l'une des nervures extérieures périphériques (3a, 3b, 3c), disposée à une distance plus grande de l'extrémité ouverte (8) que la nervure extérieure périphérique (3, 3a, 3b), est inclinée par rapport à l'axe central (4), se situe dans une plage comprise entre 3° et 20°.

4. Élément de raccordement (1) selon l'une quelconque des revendications précédentes, **caractérisé en ce que** les faces des nervures extérieures périphériques (3, 3a, 3b, 3c) orientées vers l'extrémité ouverte (8) du corps de support (2, 2a) sont inclinées selon l'angle aigu (9, 9a, 9b, 9c) par rapport à l'axe central (4).

5. Élément de raccordement (1) selon l'une quelconque des revendications précédentes, **caractérisé en ce que** le corps de support (2, 2a) comprend au moins une nervure extérieure périphérique (10, 10a) présentant une section transversale sensiblement rectangulaire.

6. Élément de raccordement (1) selon la revendication 5, **caractérisé en ce qu'**au moins une nervure extérieure périphérique (3, 3a, 3b, 3c), inclinée selon un angle aigu (9, 9a, 9b, 9c) par rapport à l'axe central (4), est disposée à la fois du côté de l'extrémité ouverte (8) du corps de support (2, 2a) et du côté opposé à l'extrémité ouverte (8) du corps de support (2, 2a) de la ou des nervures extérieures périphériques (10, 10a) présentant une section transversale sensiblement rectangulaire.

7. Élément de raccordement (1) selon la revendication 5 ou la revendication 6, **caractérisé en ce qu'**une nervure extérieure périphérique (10, 10a) présentant une section transversale sensiblement rectangulaire constitue la nervure extérieure située à la plus grande distance de l'extrémité ouverte (8) du corps de support.

8. Élément de raccordement (1) selon l'une quelconque des revendications 5 à 7, **caractérisé en ce que** les nervures extérieures périphériques (10, 10a) présentant une section transversale sensiblement rectangulaire ont un diamètre extérieur inférieur à celui des nervures extérieures (3, 3a, 3b, 3c) qui sont inclinées selon un angle aigu (9, 9a, 9b, 9c) par rapport à l'axe central (4).

9. Élément de raccordement (1) selon l'une quelconque des revendications précédentes, **caractérisé en ce qu'**il comprend en outre au moins un collet périphérique (5, 5a) formant l'extrémité du corps de support (2, 2a).

10. Élément de raccordement (1) selon l'une quelconque des revendications précédentes, **caractérisé en ce que** l'élément de raccordement (1) est réalisé sous la forme d'une pièce en polymère.

11. Élément de raccordement (1) selon l'une quelconque des revendications précédentes, **caractérisé en ce que** le matériau polymère de l'élément de raccordement (1) est choisi dans le groupe comprenant le polypropylène (PP), les polyamides, le fluorure de polyvinylidène (PVDF), le polyéthersulfone (PES), le polysulfone (PSU), le polyphénylsulfone (PPSU), le sulfure de polyphénylène (PPS), le polychlorure de vinyle (PVC), le polyoxyméthylène (POM), le copolymère acrylonitrile-butadiène-styrène (ABS) et le polyestercarbonate (PESC), ainsi que des copolymères et des mélanges de ces polymères, chacun également sous forme renforcée de fibres.

12. Raccord de tuyau (11) entre une extrémité (14) d'un tuyau en matière plastique (12) ou d'un tuyau composite métal-plastique (12) et un élément de raccordement (1), comprenant :
une extrémité (14) du tuyau en matière plastique (12) ou du tuyau composite métal-plastique (12) ; et
un élément de raccordement (1) selon l'une quelconque des revendications 1 à 11.

13. Raccord de tuyau (12) selon la revendication 12, **caractérisé en ce que** le raccord de tuyau (12) est réalisé sous la forme d'un raccord à sertissage axial avec une douille coulissante (13).
